# EUROPEAN PATENT SPECIFICATION

(11) **EP 3 027 778 B1**
(45) Date of publication and mention of the grant of the patent: **28.04.2021**
(21) Application number: 13890467.7
(22) Date of filing: 05.08.2013
(51) Int. Cl.: C21B 13/02, C01B 3/24, C21C 5/40, C21B 13/00, C01B 3/36, C21B 11/02, C21B 5/06

(54) **REDUCTION OF IRON OXIDE TO METALLIC IRON USING COKE OVEN GAS AND OXYGEN STEELMAKING FURNACE GAS**
REDUKTION VON EISENERZEN ZU METALLISCHEM EISEN MITTELS KOKSOFENGAS UND SAUERSTOFFAUFBLASKONVERTERGAS
RÉDUCTION D'OXYDE DE FER EN FER MÉTALLIQUE AU MOYEN DE GAZ DE COKERIE ET DE GAZ DE FOUR DE CONVERSION À L'OXYGÈNE

(30) Priority: 31.07.2013 US 201313955654
(43) Date of publication of application: 08.06.2016
(73) Proprietor: Midrex Technologies, Inc., Charlotte, North Carolina 28208 (US)
(72) Inventor: METIUS, Gary, E., Charlotte, NC 28270 (US); MCCLELLAND, James, M., Jr., Cornelius, NC 28031 (US); MEISSNER, David, C., Charlotte, NC 28270-0458 (US); MONTAGUE, Stephen, C., Midland, NC 28107 (US)
(74) Representative: dompatent von Kreisler Selting Werner - Partnerschaft von Patent- und Rechtsanwälten mbB
(86) International application number: PCT/US2013/053540
(87) International publication number: WO 2015/016950

(56) References cited:
- WO-A1-2013/027084
- US-A- 4 248 623
- US-A- 4 822 411
- US-A- 5 268 019
- US-A- 6 027 545
- US-A1- 2002 050 097
- US-A1- 2003 041 691
- US-A1- 2004 226 406
- US-A1- 2011 277 591
- US-A1- 2012 125 159
- US-A1- 2012 125 159

## Description

### FIELD OF THE INVENTION

The present invention relates generally to a novel method for reducing iron oxide to metallic iron in an integrated steel mill or the like that has a coke oven and/or an oxygen steelmaking furnace. More specifically, the present invention relates to a novel method for reducing iron oxide to metallic iron using coke oven gas and/or oxygen steelmaking furnace gas.

### BACKGROUND OF THE INVENTION

Integrated steel mills and the like typically have coke ovens and/or oxygen steelmaking furnaces and use excess associated gases for heating and power generation. In many applications, it would be desirable to use the associated coke oven gas (COG) and/or the associated basic oxygen furnace gas (BOFG) to reduce iron oxide to metallic iron, in the form of direct reduced iron (DRI), hot direct reduced iron (HDRI), or hot briquetted iron (HBI). Both COG and BOFG contain significant percentages of carbon monoxide (CO) and hydrogen (H₂), which are the primary reductants for reducing iron oxide to metallic iron. The COG also contains 20+% methane (CH₄), which, under the proper conditions, may be reformed with carbon dioxide (CO₂) and water (H₂O) to form CO and H₂. BOFG may contain up to 20% nitrogen (N₂), which may build up to very high levels in a recirculating system, for example.

US 2012/125159 A1 describes a process for reducing iron oxide to metallic iron using coke oven gas (COG), including: a direct reduction shaft furnace for providing off gas; a COG source for injecting COG into a reducing gas stream including at least a portion of the off gas; and the direct reduction shaft furnace reducing iron oxide to metallic iron using the reducing gas stream and injected COG. The COG has a temperature of about 1,200 degrees C or greater upon injection. The COG has a CH4 content of between about 2% and about 13%. Preferably, the COG is reformed COG. Optionally, the COG is fresh hot COG. The COG source includes a partial oxidation system. Optionally, the COG source includes a hot oxygen burner.

US 2004/226406 A1 discloses a method and an integrated steel plant wherein, instead of using coke oven gases, converter gases and blast furnace top gases are available as fuel for power generation or other heating purposes. These gases are more efficiently utilized as chemical agents for direct reduction of iron ores producing DRI. DRI is charged to blast furnaces increasing production of crude steel without increasing the capacities of the coke oven plant and blast furnaces and without changes in the quality of the crude steel, or, if production rate is maintained, the fossil fuels specific consumption is significantly reduced. Utilization of primary fossil energy also reduces the specific CO2 emissions per ton of crude steel. The specific CO2 emission in conventional integrated mills is about 1.6 tons of CO2 per ton of crude steel.

US 6 027 545 discloses a method and apparatus for producing DRI, prereduced materials, or the like, utilized in the steelmaking industry, where hydrogen contained in the gas stream purged from the reduction reactor is separated (preferably by means of a PSA system) and recycled to said reduction reactor. The productivity of the reduction plant is increased by using the separated hydrogen as a chemical reductant in the reactor, instead of using it as fuel. This is particularly useful in upgrading existing DRI production plants.

US 4 822 411 describes that when operating mills including a coling plant, a blast furnace arrangement and a converter steelworks, large amounts of partially high-grade so-called cupola gases, such as coke oven gas and converter exhaust gases, form, which cupola gases, so far. In order to render these cupola gases utilizable at a better efficiency, thus reducing the specific energy consumption per ton of crude steel produced, and in order to be less dependent on external scrap, a plant for directly reducing iron ore is additionally adjoined to the mill. The ducts for the exhaust gas from the converters and the coke oven gas ducts from the coking plant are connected to a reformer to produce reducing gas substantially containing CO and H. The reformer is connected with the direct reduction plant via a reducing gas duct.

WO 2013/027084 A1 discloses a process for producing direct reduced iron (DRI) from iron ores and reducing the cost and energy requirements of steelmaking, utilizing a gas produced from fossil fuels, containing sulfur compounds and BTX, wherein said gas is heated in a gas heater, wherein heat is transferred from a previously-heated solid material to the gas. The hot gas is caused to flow through a bed of DRI particles, iron oxides or equivalent material, outside of the reduction reactor, where said material adsorbs sulfur compounds and destroying the BTX. The gas resulting from this treatment, free from sulfur compounds and BTX, is combined with a reducing gas stream withdrawn from the reduction reactor after H2O and CO2 have at least partially been removed for regenerating its reducing potential with or without undergoing a previous cleaning treatment.

### BRIEF SUMMARY OF THE INVENTION

In a first embodiment, the present invention provides a method for reducing iron oxide to metallic iron using COG, comprising: providing a top gas stream from a direct reduction shaft furnace; removing carbon dioxide from the top gas stream using a carbon dioxide removal unit; heating the top gas stream in a gas heater to form a reducing gas stream and providing the reducing gas stream to the direct reduction shaft furnace to reduce the iron oxide to the metallic iron; and adding a COG stream to the reducing gas stream as a synthesis gas stream. The method further comprises preheating the COG stream in a preheater prior to adding the COG stream to the reducing gas stream as the synthesis gas stream. The method further comprises reacting the preheated COG stream in a thermal reactor system to form the synthesis gas stream. The thermal reactor system comprises a hot oxygen burner and a nozzle that processes oxygen and a fuel, wherein the oxygen and fuel are combined in the hot oxygen burner and contacted with the compressed clean preheated COG stream to form the synthesis gas stream.. The oxygen is optionally received from an air separation plant. The fuel optionally comprises a portion of the top gas stream. The method further optionally comprises providing a portion of the COG stream to the gas heater as fuel. The method further optionally comprises firing the preheater with a portion of the top gas stream. The method further comprises providing a portion of the preheated COG stream to the direct reduction shaft furnace as one or more of bustle gas and transition zone gas. The method further optionally comprises adding oxygen to the bustle gas. The method further optionally comprises generating steam in a boiler using the top gas stream and utilizing the steam in the carbon dioxide removal unit. The method further optionally comprises providing a portion of the top gas stream to the gas heater as fuel. The use of COG in the bustle gas and the transition zone gas allows for control of the carbon content of the resulting DRI, and allows for control of the temperature of the bed in the shaft furnace.

### BRIEF DESCRIPTION OF THE DRAWINGS

The present invention is illustrated and described herein with reference to the various drawings, in which like reference numbers are used to denote like system components/method steps, as appropriate, and in which:
FIG. 1 is a schematic diagram illustrating one exemplary embodiment of a method for reducing iron oxide to metallic iron using COG and/or BOFG;
FIG. 2 is a schematic diagram illustrating one exemplary embodiment of a process for removing complex hydrocarbons from the COG in conjunction with the method of FIG. 1;
FIG. 3 is a schematic diagram illustrating an exemplary embodiment of the novel method for reducing iron oxide to metallic iron using COG of the present invention;
FIG. 4 is another schematic diagram illustrating an alternative exemplary embodiment of a method for reducing iron oxide to metallic iron using COG - specifically, the use of COG is essentially added to an existing direct reduction plant;
FIG. 5 is a further schematic diagram illustrating an alternative exemplary embodiment of the novel method for reducing iron oxide to metallic iron using COG of the present invention - specifically, COG is used in conjunction with a low-carbon (up to about 1-2%) direct reduction plant, such as an HBI plant;
FIG. 6 is a further schematic diagram illustrating an alternative exemplary embodiment of the novel for reducing iron oxide to metallic iron using COG of the present invention - specifically, COG is used in conjunction with a high-carbon (greater than about 2%) direct reduction plant; and
FIG. 7 is a schematic diagram illustrating an alternative exemplary embodiment of a once through (i.e. no recycle) method for reducing iron oxide to metallic iron using COG or COG and BOFG.

### DETAILED DESCRIPTION OF THE INVENTION

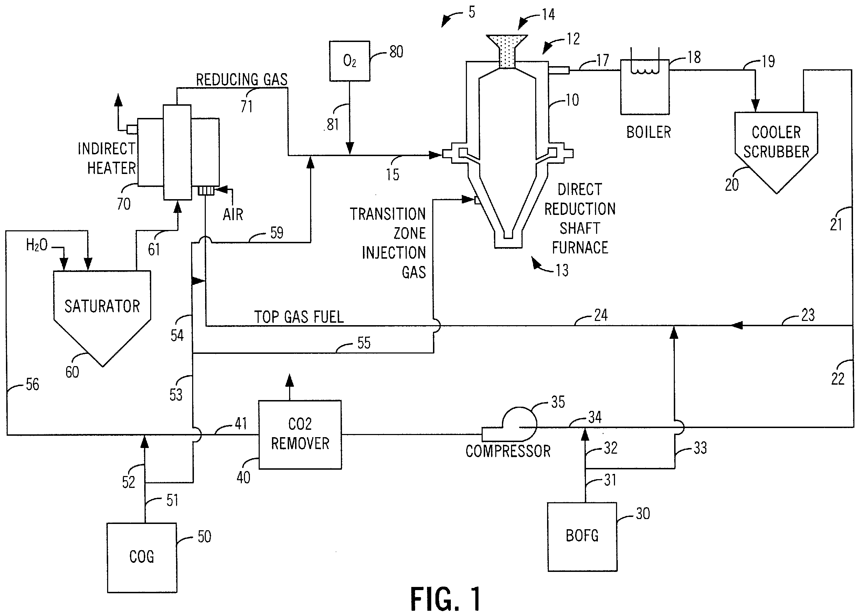

Referring specifically to FIG. 1, in one exemplary embodiment, a method for reducing iron oxide to metallic iron using COG and/or BOFG (method 5) includes individual components that are well known to those of ordinary skill in the art, and thus they are not illustrated or described in excessive detail herein, but that are combined together in an inventive process. These components include, but are not limited to, a conventional direct reduction shaft furnace 10, a waste heat boiler 18, a cooler scrubber 20, a BOFG source 30 (and/or appropriate storage vessel), a CO₂ removal system 40, a COG source 50 (and/or appropriate storage vessel), a saturator 60, an indirect heater 70, and an oxygen source 80 (and/or appropriate storage vessel).

The direct reduction shaft furnace 10 has an upper end where iron ore in the form of pellets, lumps, aggregates, etc. 14 is fed. The reduced pellets, lumps, aggregates, etc. 14 are removed at a lower end 13 of the direct reduction shaft furnace 10 as DRI. A reducing gas inlet conduit 15 is located between the feed charge and the product discharge, and supplies hot reducing gas to the direct reduction shaft furnace 10. This hot reducing gas contains CH₄, which is reformed near the gas inlet section of the direct reduction shaft furnace 10 by CO₂ and H₂O contained in the hot reducing gas to produce additional CO and H₂. The HDRI acts as a catalyst in the reforming reaction. Following this reforming reaction, the hot reducing gas containing CO and H₂ reduces the iron oxide to metallic iron and exits the direct reduction shaft furnace 10 as spent reducing gas through an offtake conduit at the top of the direct reduction shaft furnace 10 flowing into a duct 17 to the waste heat boiler 18, and then to the cooler scrubber 20. The steam generated in the waste heat boiler 18 provides the majority of the regeneration heat for the CO₂ removal system 40, for example. The cooler scrubber 20 cools and cleans the spent off gas, which exits the cooler scrubber through a conduit 21.

Next, a portion of the cooled off gas enters another conduit 23 and flows to the burners of the indirect heater 70. A portion of the cooled off gas also enters a further conduit 22 and joins a conduit 32 from the BOFG source 30, forming another conduit 34 that flows to a compressor 35. The compressed gas from the compressor 35 flows to the CO₂ removal system 40, where CO₂ is scrubbed from the gas. The CO₂ lean gas in the conduit 41 is then enhanced by COG from another conduit 52, and then enters a further conduit 56, which flows to the saturator 60 where H₂O is added to the gas in order to adjust it for carbon control in the direct reduction shaft furnace 10.

Additional BOFG is combined directly with the top gas fuel stream through a conduit 33. Additional COG is sent to the auxiliary burners of the indirect heater 70 through one or more conduits 53 and 54 and to the transition zone of the direct reduction shaft furnace 10, as transition zone injection gas, through one or more other conduits53 and 55. The gas from the saturator 60 flows through a conduit 61 to the indirect heater 70, where the gas is heated to near reduction temperature by the burners fueled by the combination of spent direct reduction furnace off gas and BOFG, as well as the auxiliary burners fueled by COG, for example.

Combustion air is preheated by heat exchange with heater flue gas. The hot gas from the indirect heater 70 leaves through a conduit 71 and O₂ from the oxygen source 80 is added via another conduit 81 to raise the temperature of the gas to 1000 degrees C or higher. The gas then flows through a further conduit 15, with the elevated temperature required to supply the endothermic load necessary for the in situ reforming in the reduction shaft furnace 10.

In general, COG and BOFG have analyses that may vary depending on the particular raw materials and specific practices at various steel mills throughout the world. The table below provides some non-limiting examples:

| | COG | BOFG |
|---|---|---|
| CO | 6-7 | 55-72 |
| CO₂ | 1-2 | 13-18 |
| H₂ | 61-63 | 1-4 |
| H₂O | 1-5 | 1-5 |
| CH₄ | 21-24 | 1-3 |
| N₂ | 3-7 | 11-20 |

If the COG and BOFG are utilized in the most efficient manner to produce DRI/HDRI/HBI with a minimum amount of COG and/or BOFG without export fuel, there is a specific ratio of COG to BOFG for each analysis of the gases. This ratio may vary from about 0.95 to about 1.25. For BOFG with higher amounts of CO, and consequently lower amounts of N₂, the ratio is closer to 0.95. For BOFG with higher amounts of N₂, and consequently lower amounts of CO, more COG is required and the ratio is closer to 1.25.

As mentioned above, it is possible to run varying ratios of COG to BOFG outside of the calculated best operating point, but it must be done with export fuel that would have to be consumed elsewhere. One such use of this export fuel could be to raise additional steam for regeneration in the CO₂ removal system 40, for example.

As described above, in addition to supplementing the shaft furnace off gas stream and contributing to the eventual reducing gas stream, other contemplated uses for the BOFG include supplementing the shaft furnace off gas stream for use as the top gas fuel for the indirect heater 70 (via conduits 31, 33, and 24). Similarly, in addition to supplementing the shaft furnace off gas stream and contributing to the eventual reducing gas stream, the COG may be used for a variety of other purposes as well.

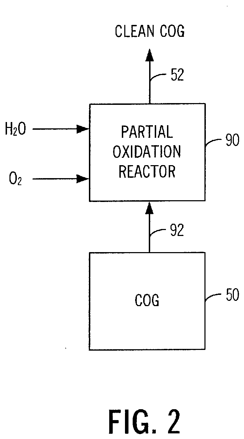

Referring specifically to FIG. 2, the COG from the COG source 50 that is eventually heated in the indirect heater 70 (FIG. 1) is preferably first cleaned of sulfur and complex hydrocarbons that would foul the indirect heater 70 via oxidation processing (i.e. partial combustion) or the like in a partial oxidation reactor 90 or the like, with the addition of O₂ and H₂O (i.e. steam). This cleaning process correspondingly reduces, and potentially eliminates, the need for BOFG supplementation, if so desired. The cleaning process is primarily required to deal with the presence of quantities of NH₃, H₂S, Tars, HCN, Naphthalene, and BTX (Benzol, Toluene, and Xylene) in the COG. Optionally, the cleaning process takes place as a lesser reaction in the ducts of the reducing gas system, as opposed to the partial oxidation reactor 90. The oxidation reaction looks as follows (exemplary only):
COG - 7.5% CO, 3.5% CO₂, 54% H₂, 25.25% CH₄, 7.45% N₂, 2.3% CnHm
1 Part Steam to 10 Parts COG
Oxygen Addition for 10 Parts COG:
   - 1.7 Parts Oxygen:
      21.38% CO, 2.8% CO₂, 61.16% H₂, 7.28% H₂O, 2.91% CH₄, 4.46% N₂
      Temp. 800 degrees C, 17.1 Parts Product Gas
   - 2 Parts Oxygen:
      22.81% CO, 2.54% CO₂, 61.74% H₂, 8.14% H₂O, 0.49% CH₄, 4.27% N2
      Temp. 880 degrees C, 17.9 Parts Product Gas

Referring again specifically to FIG. 1, COG with or without the complex hydrocarbons may also be used to supplement the top gas fuel for the indirect heater 70 (via conduits 53 and 54), as direct reduction shaft furnace transition zone injection gas (via conduits 53 and 55), and/or to enrich the ultimate reducing gas stream (via conduits 53, 54, and 59). Each of these possibilities is not mutually exclusive and all of these possibilities may be used in any combination.

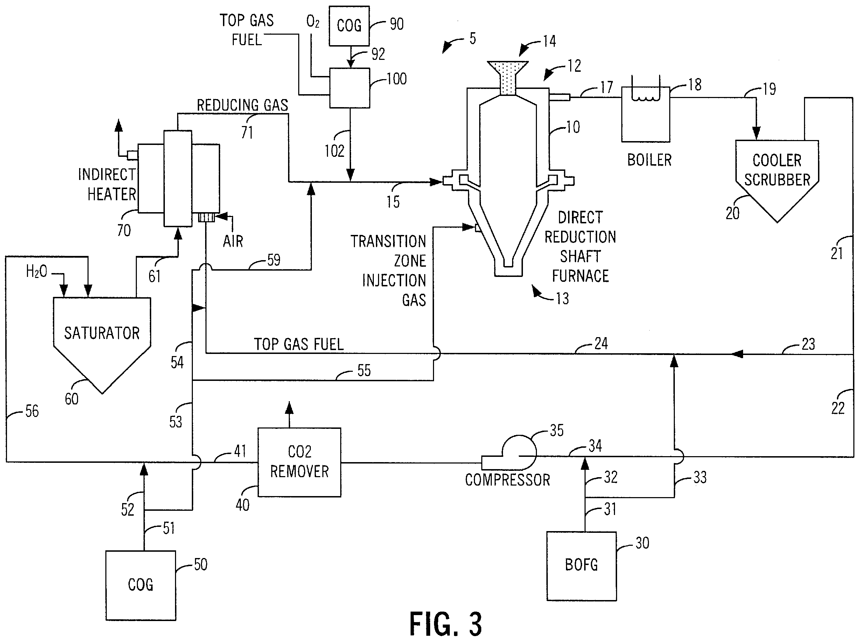

Referring now to FIG. 3, in an exemplary embodiment of the present invention, reformed COG processed in a thermal reactor system 100 is injected 102 into the system/process stream 15 just prior to the direct reduction shaft furnace 10. Preferably, this thermal reactor system 100 provides reformed COG, as indicated previously, or fresh hot COG, and is from a partial oxidation system, such as a hot oxygen burner (which injects COG 90 into an ultra-hot flame), well known to those of ordinary skill in the art. The reformed COG at the thermal reactor system 100 is hot (between about 1000 degrees C and about 1600 degrees C) and is injected 102 into the about 900 degrees C stream 15. Because of this heat, the oxygen 80 injection 81 described previously (see FIG. 1) becomes optional. The result is less oxygen 80 injection 81 into the system/process 5, while still avoiding the development of carbon soot. This COG thermal reactor system 100 injection 102 may be used in place of, or as a complement to, the cooler COG and/or BOFG injection sources and points described previously. For example, the COG thermal reactor system 100 injection 102 may be used in conjunction with a standard Midrex natural gas process with a reformer. As such, the previously described CO₂ removal system 40 and indirect heater 70 would not be necessary (the reformer would adequately perform both of these functions).

The reformed COG at the thermal reactor system 100 has the following exemplary contents: 2-13% CH₄ (at about 1,500 degrees C - about 1,200 degrees C, respectively), 18.7% CO, 1.7% CO₂, 43.4% H₂, 17.7% H₂O, 3.6% N₂, and 1.8% C₂H₆, and possibly 0.9% C₂H₄ and 1.7% C₂H₂. Of course these contents are exemplary only and should not be construed as limiting in any respect.

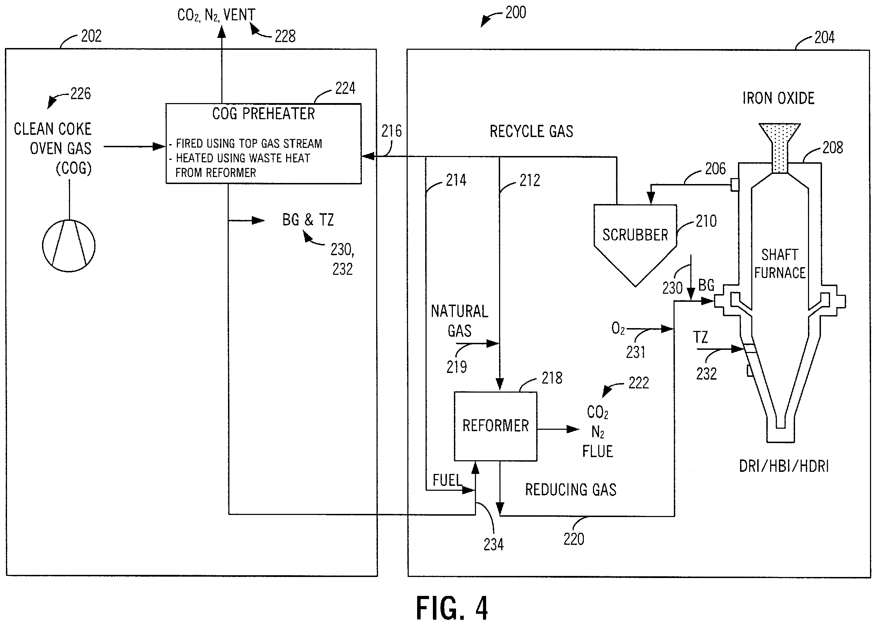

FIG. 4 is another schematic diagram illustrating an alternative exemplary embodiment of a method 200 for reducing iron oxide to metallic iron using COG - specifically, the use of COG 202 is essentially added to an existing direct reduction plant 204. This alternative exemplary embodiment can use COG up to about 120 m³/t DRI, and replaces the conventional natural gas used in about a 1.25:1 ratio. Recycled top gas 206 is removed from the shaft furnace 208 and fed to a scrubber 210 for water removal, cooling, and/or cleaning, resulting in a gas saturated at a temperature of between about 30 degrees C and about 65 degrees C. This recycled top gas 206 is then split into three streams. The first stream 212 is fed to a reformer 218, where it reforms natural gas 219, and is heated to a temperature of between about 900 degrees C and about 1100 degrees C, thereby providing reducing gas 220 that is fed into the shaft furnace 208. O₂ 231 may be added to the reducing gas 220, as necessary, prior to the reducing gas 220 being fed into the shaft furnace 208. Excess CO₂ and N₂ are removed via the reformer flue 222, for example. The second stream 214 is used as reformer fuel. The third stream 216 is used to fire a COG preheater 224, which may also or alternatively be operated using waste heat from the reformer 218. A supply of compressed clean COG 226 is processed through the COG preheater 224, and preheated to a temperature of between about 300 degrees C and about 500 degrees C. Both CO₂ and N₂ 228 are vented, as necessary, through the COG preheater 224. A portion of the compressed clean preheated COG may be delivered to the shaft furnace 208 as bustle gas (BG) 230, a portion of the compressed clean preheated COG may be delivered to the shaft furnace 208 as transition zone (TZ) gas 232, and a portion of the compressed clean preheated COG may be used as reformer fuel 234. The use of COG results in reduced natural gas consumption in the DR process, allows for control of the carbon content of the resulting DRI, and allows for control of the temperature of the bed in the shaft furnace.

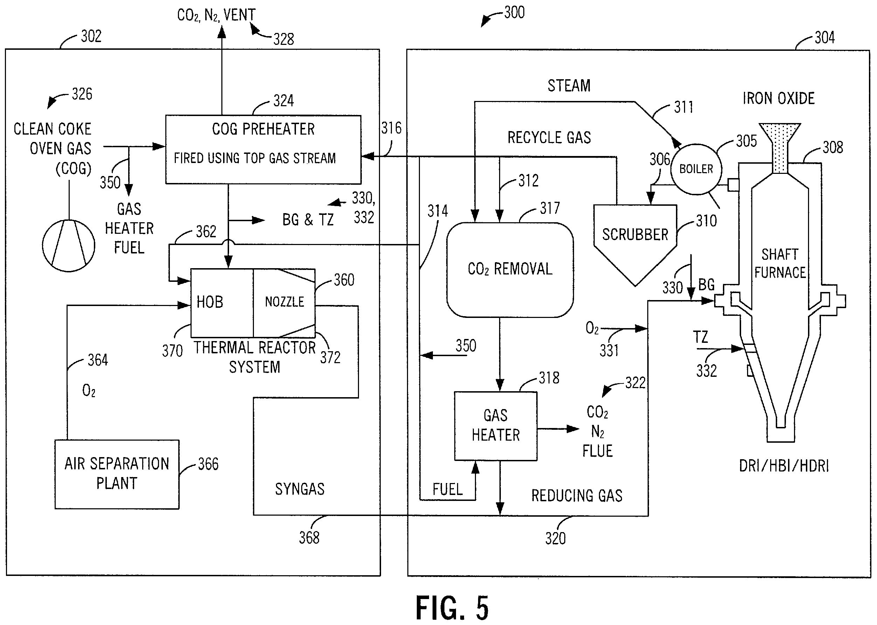

FIG. 5 is a further schematic diagram illustrating an alternative exemplary embodiment of the novel method 300 for reducing iron oxide to metallic iron using COG of the present invention - specifically, the use of COG 302 is coupled with a low-carbon (up to about 1-2%) direct reduction plant 304, such as an HBI plant, for example. This alternative exemplary embodiment uses COG up to about 500-600 m³/t DRI. Recycled top gas 306 is removed from the shaft furnace 308 and fed to a boiler 305 and scrubber 310 for water removal, cooling, and/or cleaning, resulting in a gas saturated at a temperature of between about 30 degrees C and about 45 degrees C. This recycled top gas 306 is then split into at least three streams (and likely four). The first stream 312 is fed to an absorption type CO₂ removal unit 317, which removes about 95% of the CO₂ from this stream of the recycled top gas 306, and a gas heater 318, which heats this stream of the recycled top gas 306 to a temperature of between about 900 degrees C and about 1100 degrees C, thereby providing reducing gas 320 that is fed into the shaft furnace 308. O₂ 331 may be added to the reducing gas stream 320, as necessary, prior to the reducing gas 320 being fed into the shaft furnace 308. Optionally, the CO₂ removal unit 317 is a membrane type CO₂ removal unit, a pressure swing adsorption (PSA) unit, a vacuum pressure swing adsorption (VPSA) unit, etc. Steam 311 from the boiler 305 may be used by the CO₂ removal unit 317. CO₂ and N₂ are also removed via the gas heater flue 322, for example. The second stream 314 is used as gas heater fuel. The third stream 316 is again used to fire a COG preheater 324. A supply of compressed clean COG 326 is processed through the COG preheater 324, and preheated to a temperature of between about 300 degrees C and about 500 degrees C. Both CO₂ and N₂ 328 are vented, as necessary, through the COG preheater 324. Prior to preheating, a portion of the compressed clean COG 326 may be used as gas heater fuel 350. Again, a portion of the compressed clean preheated COG may be delivered to the shaft furnace 308 as BG 330 and a portion of the compressed clean preheated COG may be delivered to the shaft furnace 308 as TZ gas 332. The remainder of the compressed clean preheated COG is processed by a thermal reactor system (TRS) 360 to form syngas 368 that is added to the previously mentioned reducing gas stream 320. Preferably, the syngas 368 consists of at least about 82% H₂ and CO. In general, the TRS 360 includes a hot oxygen burner (HOB) 370 and a nozzle 372. Fuel 362 derived from the recycled top gas 306 (in a fourth stream, for example) is combined with O₂ 364 from an air separation plant 366 or the like in the HOB 370 and, at high temperature (i.e. 2,000-2,500 degrees C), is accelerated through the nozzle 372 and contacted with the compressed clean preheated COG to form the syngas 368. The use of COG in the bustle gas and the transition zone gas allows for control of the carbon content of the resulting DRI, and allows for control of the temperature of the bed in the shaft furnace.

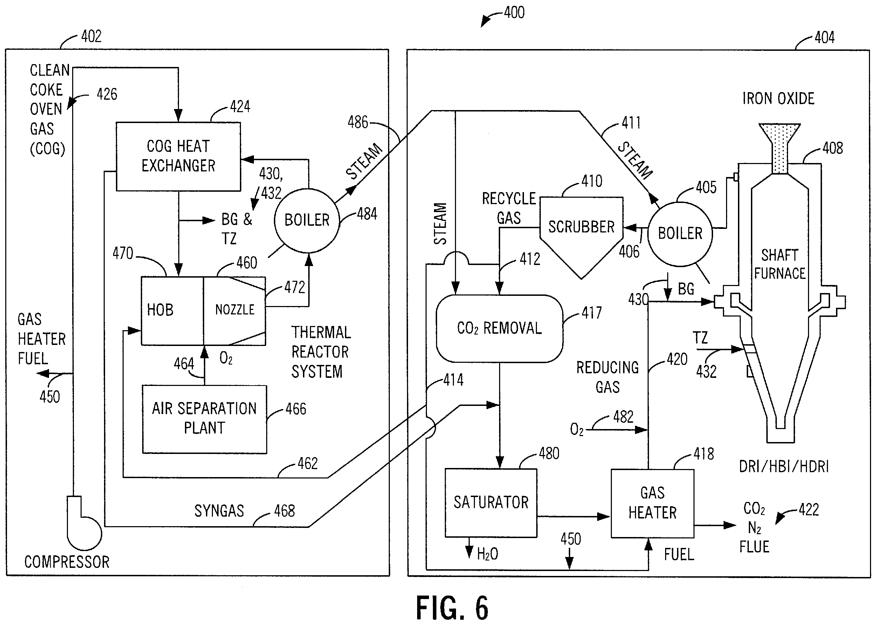

FIG. 6 is a further schematic diagram illustrating an alternative exemplary embodiment of the novel method 400 for reducing iron oxide to metallic iron using COG of the present invention - specifically, the use of COG 402 is coupled with a high-carbon (greater than about 2%) direct reduction plant 404, for example. Recycled top gas 406 is removed from the shaft furnace 408 and fed to a boiler 405 and scrubber 410 for water removal, cooling, and/or cleaning, resulting in a gas saturated at a temperature of between about 30 degrees C and about 45 degrees C. This recycled top gas 406 is then split into at least three streams. The first stream 412 is fed to a CO₂ removal unit 417, which removes about 95% of the CO₂ from this stream of the recycled top gas 406, a saturator 480, which removes H₂O from this stream of the recycled top gas 406, and a gas heater 418, which heats this stream of the recycled top gas 406 to a temperature of between about 900 degrees C and about 1100 degrees C, thereby providing reducing gas 420 that is fed back into the shaft furnace 408. Optionally, the CO₂ removal unit 417 is a membrane type CO₂ removal unit, a PSA unit, a VPSA unit, etc. Steam 411 from the boiler 405 may be used by the CO₂ removal unit 417. CO₂ and N₂ are also removed via the gas heater flue 422, for example. The second stream 414 is used as gas heater fuel. A supply of compressed clean COG 426 is processed through a COG heat exchanger 424, and preheated to a temperature of between about 300 degrees C and about 500 degrees C. Optionally, the COG heat exchanger 424 operates by cross-exchange with a still heated syngas 468, as described in greater detail below. Prior to preheating, a portion of the compressed clean COG 426 may be used as gas heater fuel 450. Again, a portion of the compressed clean preheated COG may be delivered to the shaft furnace 408 as BG 430 and a portion of the compressed clean preheated COG may be delivered to the shaft furnace 408 as TZ gas 432. Again, the remainder of the compressed clean preheated COG is processed by a TRS 460 to form the still heated syngas 468. Preferably, the syngas 468 consists of at least about 82% H₂ and CO and is generated by the TRS 460 and a recycle loop including the TRS 460, a boiler 484 (which also generates steam 486 for use in the CO₂ removal unit 417), and the COG heat exchanger 424, which cools the preheated and reacted COG stream to form the syngas 468. In general, the TRS 460 includes an HOB 470 and a nozzle 472. Fuel 462 derived from the recycled top gas 406 is combined with O₂ 464 from an air separation plant 466 or the like in the HOB 470 and, at high temperature (i.e. 2,000-2,500 degrees C), is accelerated through the nozzle 472 and contacted with the compressed clean preheated COG to form the syngas 468. The syngas 468 is preferably combined with the reducing gas stream 420 between the CO₂ removal unit 417 and the saturator 480. O₂ 482 may be added to the reducing gas 420 prior to injection into the shaft furnace 408. In this embodiment, given the higher carbon content involved, less H₂O is desirable in order to have the proper ratio of reducing gases to oxidizing gases. Thus, the approximately 1,200-degree C temperature leaving the TRS 460 is reduced to approximately 400-600 degrees C by the boiler 484, which is reduced to approximately 200 degrees C by the COG heat exchanger 424. The saturator 480 then takes the approximately 12%-H₂O syngas 468 and, when combined with the recycled top gas 406, reduces the moisture content to approximately 2-6%. Again, the use of COG in the bustle gas and the transition zone gas allows for control of the carbon content of the resulting DRI, and allows for control of the temperature of the bed in the shaft furnace.

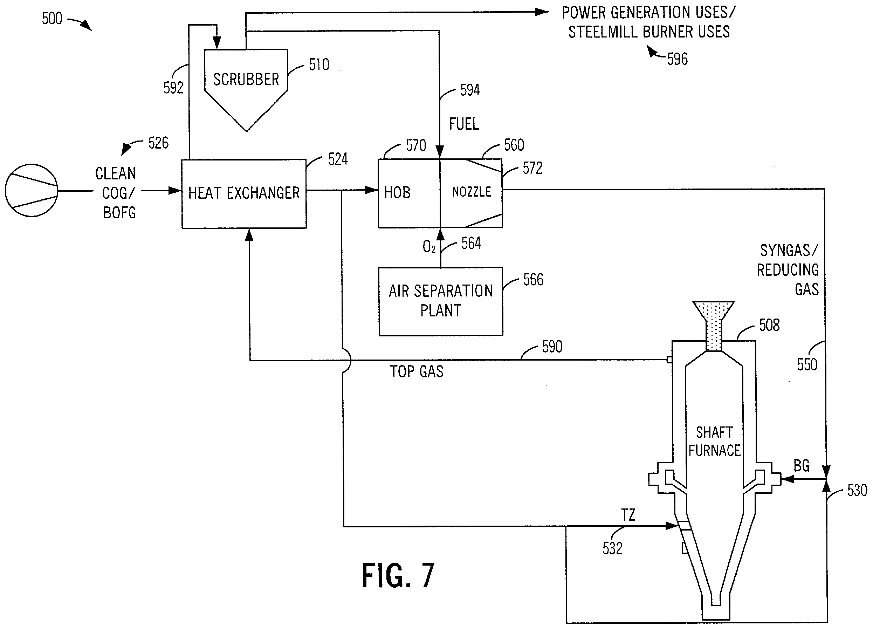

FIG. 7 is a schematic diagram illustrating an alternative exemplary embodiment of a once through (i.e. no recycle) method 500 for reducing iron oxide to metallic iron using COG or COG and BOFG. This alternative exemplary embodiment allows COG or COG and BOFG to be used to both produce metallic iron and generate power, as well as in a steelmaking facility, in applications where such multi-functionality desired. A supply of compressed clean COG or COG and BOFG 526 is processed through a heat exchanger 524, and heated to a temperature of between about 300 degrees C and about 500 degrees C. A spent top gas stream 590/592 is cooled and/or cleaned in the heat exchanger 524 and a scrubber 510 and the resulting gas stream may be used as fuel 594 for a TRS 560 or the like and/or for power generation/steelmill burners 596. Again, a portion of the compressed clean preheated COG or COG and BOFG may be delivered to the shaft furnace 508 as BG 530 and a portion of the compressed clean preheated COG or COG and BOFG may be delivered to the shaft furnace 508 as TZ gas 532. The remainder of the compressed clean preheated COG or COG and BOFG is processed by the TRS 560 to form syngas/reducing gas 550. Preferably, the syngas/reducing gas 550 consists of reductant-to-oxidant ratio of about 5-to-6. In general, the TRS 560 includes an HOB 570 and a nozzle 572. Fuel 594 derived from the heat exchanger 524, for example, is combined with O₂ 564 from an air separation plant 566 or the like in the HOB 570 and, at high temperature (i.e. 2,000-2,500 degrees C), is accelerated through the nozzle 572 and contacted with the compressed clean preheated COG or COG and BOFG to form the syngas/reducing gas 550. Again, the use of COG in the bustle gas and the transition zone gas allows for control of the carbon content of the resulting DRI, and allows for control of the temperature of the bed in the shaft furnace.

## Claims

1. A method for reducing iron oxide to metallic iron using coke oven gas (COG), comprising:
providing a top gas stream from a direct reduction shaft furnace (10, 308, 408);
removing carbon dioxide from the top gas stream using a carbon dioxide removal unit (40, 317, 417);
heating the top gas stream in a gas heater (70, 318, 418) to form a reducing gas stream and providing the reducing gas stream to the direct reduction shaft furnace (10, 308, 408) to reduce the iron oxide to the metallic iron; and
adding a COG stream preheated in a preheater (224, 324, 424) to the direct reduction shaft furnace, wherein a portion of the preheated COG stream is reacted in a thermal reactor system (100, 360, 460) and added to the reducing gas stream as a synthesis gas stream comprising at least 82% hydrogen and carbon monoxide and a portion of the preheated COG stream is added to the direct reduction shaft furnace as one or more of bustle gas and transition zone gas,
wherein the thermal reactor system (100, 360, 460) comprises a hot oxygen burner (370, 470) and a nozzle (360, 460) that utilize oxygen and a fuel, wherein the oxygen and fuel are combined in the hot oxygen burner (370, 470) and contacted with the compressed clean preheated COG stream to form the synthesis gas stream.

2. The method of claim 1, wherein the oxygen is received from an air separation plant.

3. The method of claim 1, wherein the fuel comprises a portion of the top gas stream.

4. The method of claim 1, further comprising providing a portion of the COG stream to the gas heater (70, 318, 418) as fuel.

5. The method of claim 1, further comprising firing the preheater (224, 324, 424) with a portion of the top gas stream.

6. The method of claim 1, further comprising adding oxygen to the bustle gas.

7. The method of claim 1, further comprising generating steam in a boiler using the top gas stream and utilizing the steam in the carbon dioxide removal unit.

8. The method of claim 1, further comprising providing a portion of the top gas stream to the gas heater (70, 318, 418) as fuel.

## Patentansprüche

1. Verfahren zum Reduzieren von Eisenoxid zu metallischem Eisen unter Verwendung von Kokereigas (COG), umfassend:
Bereitstellen eines Gichtgasstroms aus einem Direktreduktionsschachtofen (10, 308, 408);
Entfernen von Kohlendioxid aus dem Gichtgasstrom mit Hilfe einer Kohlendioxidentfernungseinheit (40, 317, 417);
Erhitzen des Gichtgasstroms in einem Gaserhitzer (70, 318, 418) unter Bildung eines reduzierenden Gasstroms und Bereitstellen des reduzierenden Gasstroms für den Direktreduktionsschachtofen (10, 308, 408) zum Reduzieren des Eisenoxids zu dem metallischen Eisen; und
Hinzufügen eines in einem Vorerhitzer (224, 324, 424) vorerhitzten COG-Stroms in den Direktreduktionsschachtofen, wobei ein Teil des vorerhitzten COG-Stroms in einem thermischen Reaktorsystem (100, 360, 460) umgesetzt und als Synthesegasstrom, der wenigstens 82% Wasserstoff und Kohlenmonoxid umfasst, zu dem reduzierenden Gasstrom hinzugefügt wird und ein Teil des vorerhitzten COG-Stroms als Betriebsanreicherungsgas und/oder Übergangszonengas in den Direktreduktionsschachtofen hinzugefügt wird;
wobei das thermische Reaktorsystem (100, 360, 460) einen heißen Sauerstoffbrenner (370, 470) und eine Düse (360, 460) umfasst, die Sauerstoff und einen Brennstoff nutzen, wobei der Sauerstoff und der Brennstoff in dem heißen Sauerstoffbrenner (370, 470) miteinander kombiniert werden und mit dem komprimierten sauberen vorerhitzten COG-Strom in Kontakt gebracht werden, wobei der Synthesegasstrom entsteht.

2. Verfahren gemäß Anspruch 1, wobei der Sauerstoff aus einer Lufttrennungsanlage erhalten wird.

3. Verfahren gemäß Anspruch 1, wobei der Brennstoff einen Teil des Gichtgasstroms umfasst.

4. Verfahren gemäß Anspruch 1, weiterhin umfassend das Bereitstellen eines Teils des COG-Stroms für den Gaserhitzer (70, 318, 418) als Brennstoff.

5. Verfahren gemäß Anspruch 1, weiterhin umfassend das Befeuern des Vorerhitzers (224, 324, 424) mit einem Teil des Gichtgasstroms.

6. Verfahren gemäß Anspruch 1, weiterhin umfassend das Hinzufügen von Sauerstoff zu dem Betriebsanreicherungsgas.

7. Verfahren gemäß Anspruch 1, weiterhin umfassend das Erzeugen von Dampf in einem Kessel unter Verwendung des Gichtgasstroms und das Verwenden des Dampfs in der Kohlendioxidentfernungseinheit.

8. Verfahren gemäß Anspruch 1, weiterhin umfassend das Bereitstellen eines Teils des Gichtgasstroms für den Gaserhitzer (70, 318, 418) als Brennstoff.

## Revendications

1. Procédé pour réduire de l'oxyde de fer en fer métallique en utilisant un gaz de cokerie (COG), comprenant les étapes consistant à :
procurer un flux de gaz de haut-fourneau provenant d'un four à réduction directe à cuve (10, 308, 408),
éliminer du dioxyde de carbone du flux de gaz de haut-fourneau en utilisant une unité d'élimination de dioxyde de carbone (40, 317, 417),
chauffer le flux de gaz de haut-fourneau dans un réchauffeur de gaz (70, 318, 418) pour former un flux de gaz réduisant et procurer le flux de gaz réduisant pour le four à réduction directe à cuve (10, 308, 408) pour réduire l'oxyde de fer en fer métallique, et
introduire un flux de COG préchauffé dans un préchauffeur (224, 324, 424) dans ledit four à réduction directe à cuve, dans lequel une partie du flux de COG préchauffé est faite réagir dans un système de réacteur thermique (100, 360, 460), et ajoutée au flux de gaz réduisant comme flux de gaz de synthèse comprenant au moins 82 % d'hydrogène et de monoxyde de carbone, et une partie du flux de COG préchauffé est introduite dans le four à réduction directe à cuve comme gaz d'usine d'enrichissement et/ou comme gaz de zone de transition,
dans lequel le système de réacteur thermique (100, 360, 460) comprend un brûleur chaud à oxygène (370, 470) et une buse (360, 460) qui utilisent de l'oxygène et un carburant, dans lequel l'oxygène et le carburant sont combinés dans le brûleur chaud à oxygène (370, 470) et mis en contact avec le flux de COG préchauffé propre comprimé pour former le flux de gaz de synthèse.

2. Procédé selon la revendication 1, dans lequel l'oxygène est obtenu d'une installation de séparation d'air.

3. Procédé selon la revendication 1, dans lequel le carburant comprend une partie du flux de gaz de haut-fourneau.

4. Procédé selon la revendication 1, comprenant en outre l'étape consistant à procurer une partie du flux de COG pour le réchauffeur de gaz (70, 318, 418) comme carburant.

5. Procédé selon la revendication 1, comprenant en outre l'étape consistant à allumer le préchauffeur (224, 324, 424) avec une partie du flux de gaz de haut-fourneau.

6. Procédé selon la revendication 1, comprenant en outre l'addition d'oxygène au gaz d'usine d'enrichissement.

7. Procédé selon la revendication 1, comprenant en outre l'étape consistant à générer de la vapeur dans une chaudière en utilisant le flux de gaz de haut-fourneau et utiliser la vapeur dans l'unité d'élimination de dioxyde de carbone.

8. Procédé selon la revendication 1, comprenant en outre l'étape consistant à procurer une partie du flux de gaz de haut-fourneau pour le réchauffeur de gaz (70, 318, 418) comme carburant.
